# DEMANDE DE BREVET EUROPEEN

(11) **EP 2 345 918 A1**
(43) Date de publication de la demande: **20.07.2011**
(21) Numéro de dépôt: 11150053.4
(22) Date de dépôt: 04.01.2011
(51) Int. Cl.: G02B 6/44

(54) **Fibre optique comprenant une couche extérieure apte à émettre une radiation lumineuse visible**

(30) Priorité: 19.01.2010 FR 1050319
(71) Demandeur: Nexans, 75008 Paris (FR)
(72) Inventeur: Schuepbach, Olivier, CH-2523 LIGNIERES (CH); Dardel, Boris, 2035 CORCELLES (CH)
(74) Mandataire: Peguet, Wilfried

(57) **Abrégé**

La présente invention concerne une fibre optique (10) comprenant :
- un coeur (1) entouré par une gaine optique (2), et
- une couche de différenciation (5) entourant la gaine optique (2), s'étendant de façon continue le long de la fibre optique à différencier, caractérisée en ce que la fibre optique (10) comprend en outre une couche extérieure apte à émettre une radiation lumineuse visible suite à l'exposition de la couche extérieure à une source externe de radiations lumineuses, la couche extérieure étant :
i. soit la couche de différenciation (5),
ii. soit une couche différente (6) de la couche de différenciation entourant la couche de différenciation (5), ladite couche extérieure (6) transmettant en outre la lumière visible de sorte à ce que la couche de différenciation soit visible à travers la couche extérieure (6),
l'unique couche selon i, ou l'association des deux couches selon ii, permettant ainsi d'avoir au moins deux niveaux de différenciation.

## Description

La présente invention se rapporte à une fibre optique comprenant une couche extérieure apte à émettre une radiation lumineuse visible ainsi qu'à un ensemble de fibres optiques comprenant au moins ladite fibre optique.

L'invention s'applique typiquement, mais non exclusivement, au domaine des câbles optiques destinés à raccorder par exemples une pluralité de points d'alimentation audit réseau de distribution général. Ces câbles optiques comprennent plusieurs fibres optiques disposées à l'intérieur d'un tube de protection, chacune des fibres optiques pouvant être raccordée à un point d'alimentation différent.

Ainsi, il est nécessaire pour l'opérateur de connexion de pouvoir distinguer et différencier visuellement chacune des fibres comprises dans ledit câble optique.

Pour ce faire, la différenciation entre chaque fibre optique se fait par une coloration différente de la surface extérieure de chacune des fibres optiques.

Lorsque le nombre de fibres optiques dans le câble optique est d'au plus douze, il est aisé d'arriver à une déclinaison d'une douzaine de couleur facilement différenciable et identifiable par l'opérateur.

Toutefois, lorsque le nombre de fibres optiques du câble dépassent douze fibres, la déclinaison de plus de douze couleurs devient difficile. De ce fait, en prenant par exemple un câble optique de vingt-quatre fibres optiques, chaque douzaine de fibres sera déclinée respectivement en douze couleurs différentes, laissant ainsi apparaître une duplication des couleurs telle que deux fibres optiques ne pourront être différenciables puisqu'elles seront visuellement identiques au niveau de leur couleur.

Par conséquent, d'autres moyens de différenciation sont apparus pour pallier cette limitation du nombre de couleur différenciable disponible.

A ce titre, le document US 6 576 591 décrit une fibre optique comprenant classiquement un coeur entouré par une gaine optique, cette dernière étant protégée par une gaine de protection. Que ce soit le coeur, la gaine optique ou la gaine de protection, ces trois éléments ne sont pas colorés et sont plutôt transparents. De ce fait, la distinction entre les différentes fibres optiques d'un câble s'effectue par l'application d'un motif de type annulaire, ou en d'autres terme de façon non continue ou séquencée le long de la fibre optique, autour de la gaine de protection, ce motif pouvant être coloré ou fluorescent.

Toutefois, ce type de motif séquencé tend à dégrader la qualité de transmission de la fibre optique puisqu'il peut engendrer une augmentation de l'atténuation au sein de ladite fibre optique. En outre, le procédé d'application du ou des motifs de type annulaire est un procédé long et coûteux.

Par conséquent, du fait de l'augmentation continuelle du nombre de fibres optiques par câble optique, il devient nécessaire de différencier visuellement chaque fibre optique avec de nouveaux moyens de différenciation.

Le but de la présente invention est de pallier les inconvénients des techniques de l'art antérieur en proposant notamment une fibre optique apte à être facilement différenciable parmi un grand nombre de fibres optiques, tout en présentant une qualité de transmission optimale.

La présente invention a pour objet une fibre optique comprenant :
- un coeur entouré par une gaine optique, et
- une couche de différenciation entourant la gaine optique, s'étendant de façon continue le long de la fibre optique à différencier, de préférence la couche de différenciation étant une couche extrudée,
caractérisée en ce que la fibre optique comprend en outre une couche extérieure apte à émettre une radiation lumineuse visible suite à l'exposition de la couche extérieure à une source externe de radiations lumineuses, la couche extérieure étant :
i. soit la couche de différenciation,
ii. soit une couche différente de la couche de différenciation entourant la couche de différenciation, ladite couche extérieure transmettant en outre la lumière visible de sorte à ce que la couche de différenciation soit visible à travers la couche extérieure,
l'unique couche selon i, ou l'association des deux couches selon ii permettant ainsi d'avoir au moins deux niveaux de différenciation.

La couche de différenciation de l'invention permet de différencier une fibre optique par rapport à une autre fibre optique dans un ensemble de fibres optiques. De préférence, cette couche de différenciation peut être une couche comportant un ou plusieurs motifs et/ou une couche colorée.

La couche de différenciation peut être visuellement différenciable sous l'effet d'un premier type de lumière, et la couche extérieure peut être visuellement différenciable sous l'effet d'un second type de lumière, le premier type de lumière étant différent du second type de lumière.

Plus particulièrement, la couche de différenciation permet d'avoir un premier niveau de différenciation, notamment en étant visuellement distinguable par une première couleur et/ou par un premier motif, sous l'effet d'un premier type de lumière (e.g. lumière visible). La couche extérieure permet d'avoir un second niveau de différenciation en émettant des radiations lumineuses visibles suite son exposition à un second type de lumière, comme par exemple à une source externe de radiations lumineuses, différent du premier type de lumière (e.g. lumière ultraviolet). Ces radiations lumineuses visibles émises par la couche extérieure permettent de différencier la fibre optique par une seconde couleur et/ou par un second motif, cette seconde couleur et/ou ce second motif étant respectivement différents de la première couleur et/ou du premier motif suite à cette exposition.

On entend par l'expression « transmettant la lumière » au sens de la présente invention, une couche laissant passer les radiations lumineuses, notamment laissant passer la lumière visible, de sorte à ce que la couche de différenciation puisse être identifiable visuellement à travers l'épaisseur de la couche extérieure comme si la couche extérieure n'existait sensiblement pas. La couche extérieure peut donc être par exemple une couche transparente ou une couche translucide. De préférence, la couche extérieure peut être ainsi directement en contact physique avec la couche de différenciation, et peut être avantageusement la couche la plus à l'extérieur de la fibre optique.

En outre, la couche extérieure est également apte à émettre une radiation lumineuse visible (i.e. radiation lumineuse visible émise), notamment sous l'effet d'une radiation lumineuse externe (i.e. source externe de radiations lumineuses) pouvant être de type visible ou invisible. La radiation lumineuse visible émise peut ainsi être émise suite à l'exposition de la couche extérieure à une source externe de radiations lumineuses, comme par exemple une source de radiations lumineuses invisibles du type ultra-violet dont les longueurs d'onde vont notamment de 100 à 400 nm, et de préférence de 250 à 400 nm.

Typiquement, cette source externe ne modifie pas irréversiblement la couche de différenciation et/ou la couche extérieure, en ce sens que lorsque la fibre optique n'est plus exposée à ladite source externe de radiations lumineuses, elle reste distinguable visuellement par le biais de sa couche de différenciation sous l'effet de la lumière visible, et non plus par sa couche extérieure.

En d'autres termes, la seconde couleur et/ou le second motif visuellement distinguable suite à l'exposition de la couche extérieure à la source externe, disparaît une fois l'exposition terminée pour laisser la place à la première couleur et/ou au premier motif de la couche de différenciation. La seconde couleur et/ou le second motif ne restent ainsi pas de façon irréversible une fois l'exposition à la source externe terminée car il faut pouvoir garder l'avantage du double niveau de différenciation conforme à la présente invention.

Ainsi, en utilisant la couche extérieure de l'invention combinée à une couche de différenciation, que ce soit selon le mode de réalisation i ou ii, on peut avantageusement considérer au moins deux niveaux de différenciation, à savoir on peut facilement différencier, pour une même couche de différenciation, les fibres optiques comprenant ladite couche extérieure des fibres optiques ne comprenant pas cette couche extérieure.

Les possibilités de combinaisons dans un ensemble de fibres optiques comprenant et ne comprenant pas ladite couche extérieure sont donc bien supérieures aux solutions proposées dans l'art antérieur.

Dans un mode de réalisation particulier, la couche extérieure peut comprendre un matériau choisi parmi un matériau réfléchissant et un matériau luminescent, ou un de leurs mélanges.

Plus particulièrement, le matériau réfléchissant peut comprendre des particules argentées.

Le matériau luminescent peut être notamment choisi parmi un matériau fluorescent, un matériau phosphorescent et un matériau bioluminescent, ou un de leurs mélanges.

A titre d'exemple, le matériau fluorescent permet notamment d'émettre des radiations lumineuses visibles sous l'action de radiations lumineuses invisibles du type lumière ultra-violet ou lumière dite « bleue ». Le matériau fluorescent peut comprendre des pigments fluorescents, et de préférence des pigments fluorescents colorés.

Lorsque l'on utilise des pigments fluorescents colorés, on peut avantageusement considérer au moins trois niveaux de différenciation. En effet, on peut facilement différencier, pour une même couche de différenciation, au moins trois types de fibre optiques, à savoir les fibres optiques ne comprenant pas ladite couche extérieure, les fibres optiques comprenant une couche extérieure selon l'invention avec une première couleur émise, et les fibres optiques comprenant une couche extérieure selon l'invention avec une seconde couleur émise.

Dans un mode de réalisation particulier, la couche extérieure est obtenue à partir d'une résine acrylique comprenant ledit matériau luminescent et/ou réfléchissant. La couche extérieure est de préférence réticulée. On préfèrera utiliser une couche extérieure réticulée obtenue à partir d'une résine acrylique dans laquelle est incorporé un matériau fluorescent.

La fibre optique de l'invention présente en outre l'avantage de garantir une qualité de transmission optimale.

Plus particulièrement, selon le mode de réalisation ii, la couche extérieure est appliquée sur tout le long de la surface de la couche de différenciation, ou en d'autres termes, la couche extérieure recouvre de façon continue toute la surface de la couche de différenciation le long de la fibre optique. Dans le mode de réalisation i, la couche extérieure (i.e. la couche de différenciation) entoure quant à elle la gaine optique sur tout le long de la fibre optique.

De préférence, la couche extérieure est ainsi une couche extrudée. La fibre optique ainsi obtenue ne présente pas de défaut d'atténuation du fait de la continuité du recouvrement et du procédé de recouvrement utilisé.

A titre d'exemple et selon le mode de réalisation ii, la couche extérieure est extrudée autour de la couche de différenciation le long de la fibre optique, l'extrusion étant un procédé simple et bien connu de l'homme du métier.

Un autre objet de l'invention concerne un ensemble de fibres optiques comprenant plusieurs fibres optiques telles que définies précédemment.

Un autre objet de l'invention concerne un câble optique comprenant ledit ensemble de fibres optiques, caractérisé en ce que ledit ensemble est disposé à l'intérieur d'un élément de protection tel que par exemple un tube de protection ou une gaine de protection.

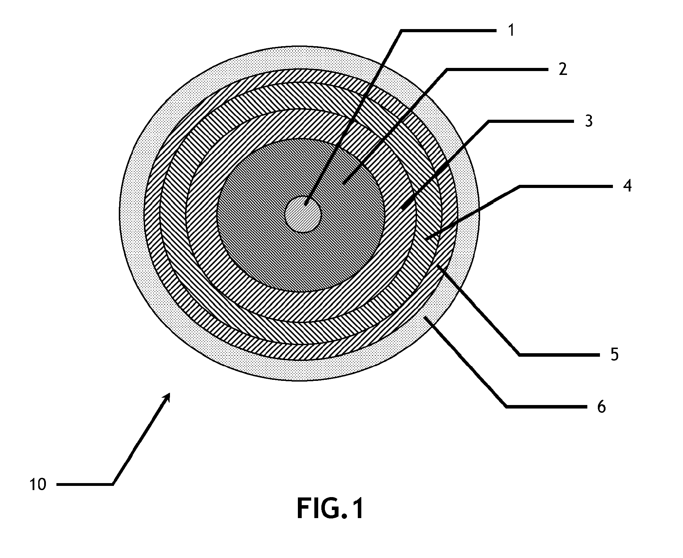

D'autres caractéristiques et avantages de la présente invention apparaîtront à la lumière de la description d'un exemple non limitatif d'une fibre optique selon l'invention fait en référence à la figure 1 représentant une vue schématique en coupe transversale d'une fibre optique selon la présente invention.

Pour des raisons de clarté, seuls les éléments essentiels pour la compréhension de l'invention ont été représentés de manière schématique, et ceci sans respect de l'échelle.

La figure 1 représente une fibre optique 10 selon le mode de réalisation ii de la présente invention. La fibre optique 10 comprend successivement et coaxialement un coeur 1 central, une gaine optique 2, une couche interne 3 polymérique de protection, et une couche externe 4 polymérique de protection, ce type de configuration étant bien connu de l'homme du métier. Plus particulièrement, les couches interne et externe polymériques sont obtenues à partir de polymères identiques ou différents qui sont réticulés. Selon le type de fibre optique mise en oeuvre, une unique couche polymérique de protection peut être suffisante.

La couche externe 4 de protection est entourée par une couche colorée 5, la couleur de cette couche colorée 5 permettant de différencier cette fibre optique 10 d'autres fibres optiques recouverte par une couche colorée d'une couleur différente.

Dans un mode de réalisation non représenté, la couche colorée peut être la couche externe de protection, le mode de réalisation d'une telle couche étant bien connu de l'homme du métier.

Ainsi, dans cet exemple de réalisation, la couche de différenciation peut être la couche externe de protection 4 ou peut être une couche supplémentaire, différente d'une couche polymérique de protection, telle que la couche colorée 5 entourant la couche externe de protection 4.

La fibre optique 10 comporte en outre une couche extérieure 6 recouvrant la couche colorée 5. Cette couche extérieure a une double particularité, à savoir d'une part, elle est transparente ou translucide, afin de pouvoir visualiser distinctement en lumière visible la couleur de la couche colorée 5 à travers cette couche extérieure 6, et d'autre part, elle comporte un matériau lui permettant d'émettre une lumière visible par le biais d'une source externe de radiations lumineuses.

Plus particulièrement, la couche extérieure est une résine acrylique transparente ou translucide réticulée comportant des pigments fluorescents destinés à émettre de la lumière visible lorsqu'ils sont soumis à une lumière ultra-violet ou à une lumière dite « bleue ».

Le procédé de fabrication pour l'application de la couche extérieure consiste tout d'abord à extruder, autour de la fibre optique comportant la couche colorée 5, une composition à base de résine acrylique dans laquelle ont été incorporés de 1 à 10% en poids de pigments fluorescents, et de préférence de 1 à 5% en poids de pigments fluorescents.

A titre d'exemple, la résine acrylique est une résine commercialisée par la société DSM, sous la référence Cablelite 751-000 DSM clear, et les pigments fluorescents sont des pigments commercialisés par la société Beaver, sous la référence L-142 (couleur jaune-vert) ou L-174 (couleur bleu-vert).

La fibre optique ainsi obtenue passe ensuite dans un four à rayonnements ultra-violet afin de réticuler la résine acrylique.

Bien entendu, selon le mode de réalisation i de l'invention (non représenté schématiquement), la couche de différenciation 5 peut comprendre la couche extérieure. Ainsi, la couche externe de protection 4 de la figure 1 ne sera recouverte que d'une seule et unique couche.

Les détails mentionnés ci-avant sur la couche de différenciation et sur la couche extérieure s'appliquent également à ce mode de réalisation i, excepté le fait qu'il n'est plus nécessaire que la couche extérieure (i.e. la couche de différenciation) soit transparente ou translucide.

Le procédé de fabrication pour l'application de cette unique couche extérieure (i.e. couche de différenciation) consiste à incorporer dans le matériau à l'origine de la couche colorée des pigments fluorescents destinés à émettre de la lumière visible lorsqu'ils sont soumis à une lumière ultra-violet ou à une lumière dite « bleue ». Ces pigments fluorescents peuvent être incorporés dans ledit matériau à hauteur de 1 à 10% en poids, et de préférence de 1 à 5% en poids, le matériau pouvant être à base d'une résine acrylique.

Par ailleurs, on peut mentionner ci-après un exemple d'une méthode de différenciation pour un ensemble de fibres optiques selon l'invention, ledit ensemble de fibres optiques comprenant :
- au moins une première fibre optique A1 et une seconde fibre optique A2 telles que définies dans la présente invention, comportant chacune une couche extérieure comprenant un matériau fluorescent, et respectivement une couche de différenciation de couleur c1 et de couleur c2, et
- au moins une première fibre optique B1 et une seconde fibre optique B2 telles que définies dans la présente invention, comportant respectivement une couche de différenciation de couleur c1 et de couleur c2, mais ces deux fibres optiques ne comportant pas de couche extérieure selon l'invention.

Ainsi, la méthode de différenciation pour cet ensemble de fibres optiques peut comprendre les étapes consistant à :
- réaliser une première différenciation sous lumière ultra-violet ou lumière bleue (cf. second type de lumière), pour sélectionner un premier sous-ensemble de fibres optiques constitué des fibres A1 et A2 et un deuxième sous-ensemble de fibres optiques constitué des fibres B1 et B2, et
- réaliser une seconde différenciation sous lumière visible naturelle (cf. premier type de lumière), au sein du premier sous-ensemble de fibres optiques d'une part, et au sein du deuxième sous-ensemble de fibres optiques, d'autre part.

## Revendications

1. Fibre optique (10) comprenant :
- un coeur (1) entouré par une gaine optique (2), et
- une couche de différenciation (5) entourant la gaine optique (2), s'étendant de façon continue le long de la fibre optique à différencier,
**caractérisée en ce que** la fibre optique (10) comprend en outre une couche extérieure apte à émettre une radiation lumineuse visible suite à l'exposition de la couche extérieure à une source externe de radiations lumineuses, la couche extérieure étant :
i. soit la couche de différenciation (5),
ii. soit une couche différente (6) de la couche de différenciation entourant la couche de différenciation (5), ladite couche extérieure (6) transmettant en outre la lumière visible de sorte à ce que la couche de différenciation soit visible à travers la couche extérieure (6),
l'unique couche selon i, ou l'association des deux couches selon ii, permettant ainsi d'avoir au moins deux niveaux de différenciation.

2. Fibre optique selon la revendication 1, **caractérisée en ce que** la couche extérieure comprend un matériau choisi parmi un matériau réfléchissant et un matériau luminescent, ou un de leurs mélanges.

3. Fibre optique selon la revendication 2, **caractérisée en ce que** le matériau réfléchissant comprend des particules argentées.

4. Fibre optique selon la revendication 2, **caractérisée en ce que** le matériau luminescent est choisi parmi un matériau fluorescent, un matériau phosphorescent et un matériau bioluminescent, ou un de leurs mélanges.

5. Fibre optique selon la revendication 4, **caractérisée en ce que** le matériau fluorescent comprend des pigments fluorescents.

6. Fibre optique selon la revendication 5, **caractérisée en ce que** les pigments fluorescents sont constitués de pigments fluorescents colorés.

7. Fibre optique selon l'une quelconque des revendications 2 à 6, **caractérisée en ce que** la couche extérieure est obtenue à partir d'une résine acrylique comprenant un matériau réfléchissant et/ou un matériau luminescent.

8. Fibre optique selon l'une quelconque des revendications précédentes, **caractérisée en ce que** la couche de différenciation est une couche extrudée.

9. Fibre optique selon l'une quelconque des revendications précédentes, **caractérisée en ce que** la couche extérieure (6), lorsqu'elle entoure la couche de différenciation selon ii, est appliquée sur tout le long de la surface de la couche de différenciation (5).

10. Fibre optique selon la revendication 9, **caractérisée en ce que** la couche extérieure est une couche extrudée.

11. Fibre optique selon l'une quelconque des revendications précédentes, **caractérisée en ce que** la couche de différenciation (5) est une couche colorée.

12. Fibre optique selon l'une quelconque des revendications précédentes, **caractérisée en ce que** la couche de différenciation est visuellement différenciable sous l'effet d'un premier type de lumière, et que la couche extérieure est visuellement différenciable sous l'effet d'un second type de lumière, le premier type de lumière étant différent du second type de lumière.

13. Fibre optique selon l'une quelconque des revendications précédentes, **caractérisée en ce que** la source externe est une source de lumière ultra-violet.

14. Ensemble de fibres optiques comprenant plusieurs fibres optiques (10) telles que définies aux revendications 1 à 13.

15. Câble optique comprenant un ensemble de fibres optiques selon la revendication 14, **caractérisé en ce que** ledit ensemble est disposé à l'intérieur d'un élément de protection.
